# EUROPÄISCHE PATENTSCHRIFT

(11) **EP 1 083 092 B1**
(45) Veröffentlichungstag und Bekanntmachung des Hinweises auf die Patenterteilung: **03.11.2004**
(21) Anmeldenummer: 00118162.7
(22) Anmeldetag: 30.08.2000
(51) Int. Cl.: B60R 7/04

(54) **Kraftfahrzeugaufbau mit einem Mitteltunnel**
Vehicle floor with a central tunnel
Plancher d'un véhicule avec un tunnel centrale

(30) Priorität: 08.09.1999 DE 19942888
(43) Veröffentlichungstag der Anmeldung: 14.03.2001
(73) Patentinhaber: Volkswagen Aktiengesellschaft, 38436 Wolfsburg (DE)
(72) Erfinder: Hofmann, Gustav, 38114 Braunschweig (DE); Soltendieck, Bernd, 38108 Braunschweig (DE); Jauch-Paganetti, Michele, 38106 Braunschweig (DE)

(56) Entgegenhaltungen:
- EP-A- 0 212 262
- DE-A- 19 529 876
- DE-A- 19 633 913
- DE-A- 19 855 095
- DE-U- 8 418 140
- DE-U- 8 437 440
- DE-U- 29 509 677
- FR-A- 2 724 609
- US-A- 4 818 008
- US-A- 4 864 886

## Beschreibung

Die Erfindung betrifft einen Fahrzeugaufbau eines Kraftfahrzeugs nach dem Oberbegriff des Anspruchs 1.

Übliche Personenkraftwagen weisen einen Mitteltunnel zur Aufnahme von Bauteilen, wie beispielsweise von Auspuffrohren, Kabelkanälen, Antriebswellen, etc. auf. In an sich bekannter Weise ist auf einem solchen Mitteltunnel meist ein in Fahrzeuglängsrichtung weisender Handbremshebel angebracht. Für eine Bremsbetätigung kann der Handbremshebel an einem nach vorne abstehenden Griffteil nach oben geschwenkt werden. Im Bereich der Schwenkbewegung ist ein Freiraum vorzusehen, wodurch bisher insbesondere neben und längsseits des Handbremshebels ein ungenutzter Totraum verbleibt. Ein solcher Totraum erstreckt sich bei einer Mehrzahl von Fahrzeugausführungen jeweils auch weiter zwischen einer Tunnelseitenwand und einem daneben längsverschiebbar angeordneten Fahrzeugsitz. Es wird zwar regelmäßig von Fahrzeugbenutzern versucht, diese Toträume als Ablageflächen und Aufnahmeräume für Gegenstände zu nutzen. Dies ist jedoch problematisch, da solche Gegenstände dort keinen festen Halt haben und damit nachteilig verrutschen und/oder nicht mehr auffindbar herunterfallen und ggf. verklemmen können. Insbesondere können Gegenstände unter die Fahrzeugsitze gelangen und dort die Fahrzeugverstellung behindern und ggf. dabei auch die Sitzstelleinrichtungen beschädigen.

Die gattungsbildende DE 195 29 876 A1 und die DE 196 33 913 A1 beschreiben ein Aufsatzteil auf einer Mittelkonsole, das in einem Totraum oberhalb der Mittelkonsole neben einem Handbremshebel angeordnet ist. Das Aufsatzteil besteht aus einem offenen Rahmenteil und verschiedenen in das Rahmenteil einsetzbaren Einsätzen. Die Einsätze sind in ihrer Position innerhalb des Rahmens frei wählbar und verschiebbar beziehungsweise austauschbar. Als mögliche Einsätze werden Tassen- oder Flaschenhalter, Münzspender, Brillenablagefächer, Mobiltelefonhalter oder Aufnahmen von Compact Discs oder Hörkassetten genannt.

Aus der EP 0 212 262 A2 ist eine nach hinten schwenkbare zweiteilige Armlehne zwischen dem Fahrer- und Beifahrersitz bekannt, die im heruntergeklappten Zustand als Armlehne zu gebrauchen ist und im hochgeklappten Zustand einen Handbremshebel zur Benutzung sowie Ablagefächer in der Armlehne freigibt.

Die DE 84 18 140 U1 offenbart eine Mittelarmlehne für einen Vordersitz in einem Kraftfahrzeug, aus der nach vorne der Handbremshebel herausragt und deren Deckel abklappbar ist, so dass ein darunter liegendes Ablagefach in der Mittelkonsole zugänglich ist.

Die US 4,818,008 offenbart ebenfalls eine Mittelkonsole mit einem nach oben offenen Ablagefach, das von einem Deckel verschlossen werden kann, wobei der geschlossene Deckel als Armlehne dient. Die Besonderheit an dieser Konstruktion ist, dass der Handbremshebel eine U-Form aufweist und die Mittelkonsole umfasst. Die Anordnung ist nach den Figuren symmetrisch zur Fahrzeuglängsachse.

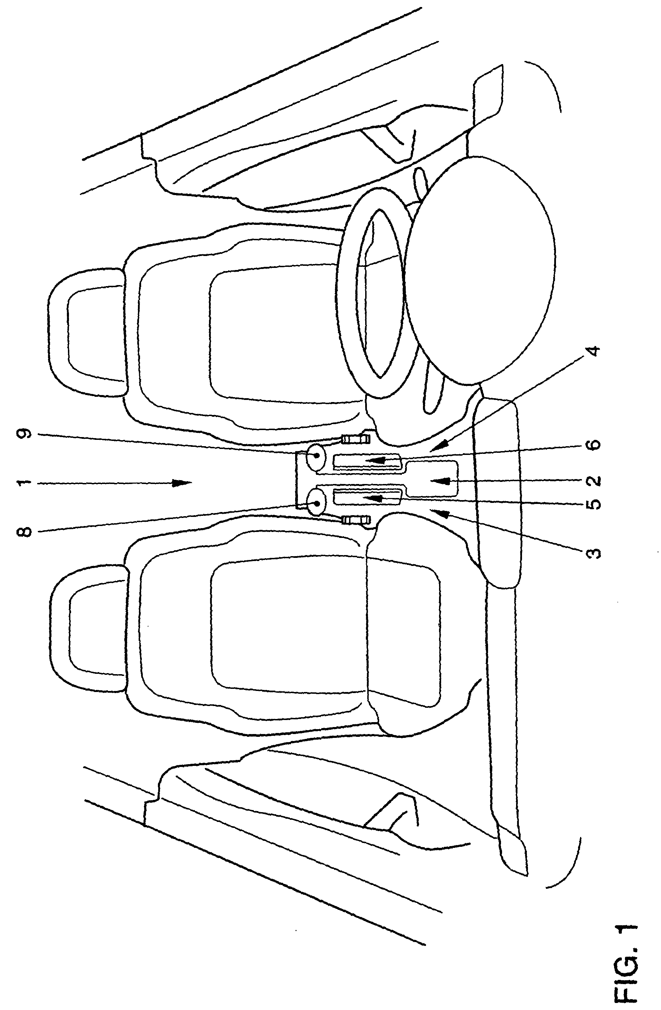

In der DE 295 09 677 U1 ist eine Vorrichtung zur Aufnahme eines Teeservices beschrieben, die in dem Ausführungsbeispiel als Mittelkonsole ausgebildet ist. Diese weist eine brückenartige Form auf, die sich laut Figur 1 und 4 symmetrisch am Boden auf beiden Seiten des Handbremshebels abstützt, so dass der Handbremshebel immer frei zugänglich und benutzbar ist.

Um den Stauraum im Fahrzeug besser zu nutzen und insbesondere eine Ablagemöglichkeit für Reiseatlanten zuschaffen, schlägt die prioritätsältere DE 198 55 095 A1 eine am Rahmen eines Fahrzeugsitzes lösbar befestigte, also "sitzfeste" Ablage zur Aufbewahrung von Gegenständen zwischen einer Mittelkonsole beziehungsweise einem Mitteltunnel und einem Fahrzeugsitz vor.

Gemeinsam ist dem vorveröffentlichten diskutierten Stand der Technik also die Anordnung von Behältnissen auf dem Mitteltunnel oder oberhalb des Mitteltunnels.

Aufgabe der Erfindung ist es, eine weitere Ablagemöglichkeit nahe des Fahrers in einen bisher ungenutzen Raum zu integrieren.

Diese Aufgabe wird durch die kennzeichnenden Merkmale des Anspruchs 1 gelöst.

Gemäß Anspruch 1 ist also erfindungsgemäß in einen solchen Bereich neben der Mittelkonsole und ortsfest an dieser, dass heißt befestigt an dem Mitteltunnel, ein Behältnis zur Aufnahme von Gegenständen eingesetzt. Damit ist ein solcher Bereich definiert begrenzt und zur stabilen und lagesicheren Aufnahme und Ablage von Gegenständen gut geeignet. Solche Gegenstände können weder herunterfallen, verschwinden oder mit angrenzenden Bauteilen verklemmen, sondern stehen in guter Griffnähe im Behältnis zur Verfügung. Insbesondere wird bei einem ortsfesten Behältnis mit einem Freigang zu einem angrenzenden Fahrzeugsitz durch solche abgelegte Gegenstände die Fahrzeugsitzverstellung nicht behindert.

Ein Vorteil der Erfindung ist darin zu sehen, dass sie auch bei Fahrzeugen ohne Mittelkonsole Einsatz finden kann. Auch schließt die Erfndung das Vorsehen weiterer Ablagen auf der Mittelkonsole nicht aus. Die bei der Erfindung vorgesehene Befestigung des Behältnisses am Mitteltunnel beeinflusst einerseits Konstruktion und Verstellbarkeit des Sitzes nicht und ist andererseits unabhängig davon, ob beispielsweise ein Beifahrersitz zum Lastentransport ausgebaut ist oder nicht.

Als Behältnis kann sowohl eine Tasche als auch eine stabile Box verwendet werden, wobei vorzugsweise nach oben weisende, verschließbare Öffnungen vorgesehen sind. Eine Tasche kann mit guter Optik durch einen längsverlaufenden Reißverschluss sicher verschließbar sein. Bei einer stabilen Box ist vorzugsweise ein aufklappbarer und ggf. mit einem Schloss verschließbarer Deckel vorzusehen.

Solche Behältnisse können in einer bevorzugten Ausführungsform ggf. an zugeordneten Halterungen einsteckbar und aus dem Fahrzeug herausnehmbar ausgeführt sein, so daß damit ein mitnehmbarer Behälter, beispielsweise für Wertgegenstände, geschaffen wird. Insbesondere kann dazu eine Tasche als hochwertige Herrentasche in Leder ausgebildet sein.

Wenn der Handbremshebel wie üblich auf der Längsmitte des Mitteltunnels angebracht ist, können dann beidseitig liegende Bereiche mit jeweils einem Behältnis bestückt werden.

In einer dazu alternativen Ausführungsform kann ein geeignetes Behältnis auch sattelförmig ausgebildet sein und über einen hinteren Teil des Bremshebels, ohne dessen Griffteil abzudecken, gesetzt werden. Dabei wird jeweils ein Seitenteil eines solchen Behältnisses in einen der beidseitigen Bereiche eingesetzt, dergestalt, dass ein mittlerer nach unten offener Längsspalt des Behältnisses als Freiraum für eine Betätigung des Handbremshebels verbleibt.

Ein solches Behältnis kann vorteilhaft auch so weitergebildet werden, dass es als Trägerteil für weitere Funktionselemente verwendbar ist. Die Tragfunktion können je nach den Gegebenheiten von Wandteilen und/oder Rahmenteilen eines Behältnisses übernommen werden.

Durch die Anordnung des Behältnisses in Griffnähe der Frontpassagiere bietet es sich an, als weitere Funktionselemente nach oben offene Ablagefächer am Behältnis anzubringen. Vorzugsweise kann dazu wenigstens ein Cupholder, beispielsweise als Haltering angebracht sein.

Anhand einer Zeichnung wird die Erfindung näher erläutert.

Es zeigen:
Fig. 1 eine schematische, perspektivische Darstellung eines frontseitigen Fahrgastraums mit einem Mitteltunnel, und
Fig. 2 eine schematische, perspektivische Darstellung des Frontsitzbereichs der Fig. 1 mit Blickrichtung von hinten-oben.

In der Fig. 1 ist ein Frontsitzbereich einer Fahrgastzelle eines Kraftfahrzeugs mit einem Mitteltunnel 1 schematisch dargestellt. Auf diesem Mitteltunnel 1 ist ein in Fahrzeuglängsrichtung ausgerichteter Handbremshebel 2 angeordnet.

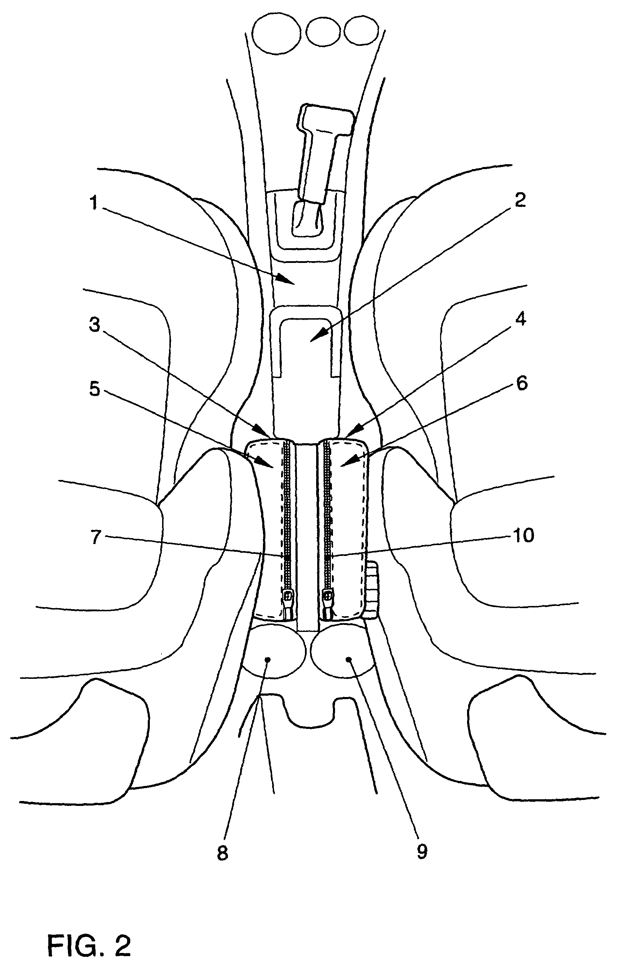

In Bereichen 3, 4 die längs des Handbremshebels 2, d.h. zwischen dem Handbremshebel 2, zwischen dem Mitteltunnel 1 und den Sitzen verlaufen, ist jeweils ein Behältnis 5, 6 zur Aufnahme von Gegenständen ortsfest eingesetzt. Die Behältnisse 5, 6 sind in den Bereichen 3, 4 an in den Fig. 1 und 2 nicht dargestellten, zugeordneten Halterungen einsteckbar, so dass sie aus dem Fahrzeug herausnehmbar ausgeführt sind. Dadurch wird ein mitnehmbares Behältnis 5, 6 für z. B. Wertgegenstände geschaffen. Die Behältnisse 5, 6 können dabei beispielsweise als hochwertige Herrentaschen in Leder ausgebildet sein.

Wie dies insbesondere aus der Fig. 2 ersichtlich ist, ist in den Behältnissen 5, 6 jeweils eine nach oben weisende, verschließbare Öffnung vorgesehen, die mit einer guten Optik durch einen längsverlaufenden Reißverschluss 7, 10 sicher verschließbar ist.

Die Behältnisse 5, 6 weisen, wie dies aus den Fig. 1 und 2 ersichtlich ist, zudem durch Halteringe gebildete Cupholder 8, 9 auf, in die z. B. Becher oder Flaschen einsetzbar sind und während der Fahrt sicher gehalten werden. Die hierfür erforderliche Tragfunktion an den Behältnissen 5, 6 übernehmen je nach den Gegebenheiten Wandteile und/oder Rahmenteile der Behältnisse 5, 6.

## Patentansprüche

1. Kraftfahrzeugaufbau mit wenigstens einem Fahrzeugsitz und einem Mitteltunnel (1) und einem darauf in Fahrzeuglängsrichtung angeordneten Handbremshebel (2), wobei neben und längsseits des Handbremshebels (2) wenigstens ein Totraum gebildet und in diesem ortsfest ein Behältnis (5, 6) zur Aufnahme von Gegenständen vorgesehen ist,
**dadurch gekennzeichnet, dass**
das Behältnis (5, 6) in dem Bereich (3, 4) zwischen Mitteltunnel (1) und Fahrzeugsitz mit Freigang zum Fahrzeugsitz angeordnet ist.

2. Fahrzeugaufbau nach Anspruch 1,
**dadurch gekennzeichnet, dass**
das Behältnis (5, 6) eine Tasche (5, 6) ist, die eine nach oben weisende, vorzugsweise verschließbare Taschenöffnung aufweist.

3. Fahrzeugaufbau nach einem der Ansprüche 1 oder 2,
**dadurch gekennzeichnet, dass**
das Behältnis (5, 6) herausnehmbar ist.

4. Fahrzeugaufbau nach einem der Ansprüche 1 bis 3,
**dadurch gekennzeichnet, dass**
das Behältnis (5, 6) oder wenigstens ein Rahmenteil des Behältnisses als Trägerteil für Funktionselemente (8, 9) ausgebildet ist.

5. Fahrzeugaufbau nach Anspruch 4,
**dadurch gekennzeichnet, dass**
im Bereich des Mitteltunnels (1) weitere, als Funktionselemente, wie ein Cupholder (8, 9), ausgebildete Behältnisse, angebracht sind.

6. Fahrzeugaufbau nach einem der Ansprüche 1 bis 5,
**dadurch gekennzeichnet, dass**
beiderseits des Mitteltunnels (1) Behältnisse (5, 6) angeordnet sind.

## Claims

1. Automotive body having at least one vehicle seat and a central tunnel (1) and a handbrake lever (2) arranged on the latter in the longitudinal direction of the vehicle, at least one dead space being formed next to and alongside the handbrake lever (2) and a container (5, 6) being provided in a stationary manner in the said dead space in order to accommodate objects, **characterized in that** the container (5, 6) is arranged in the region (3, 4) between the central tunnel (1) and vehicle seat with access from the vehicle seat.

2. Automotive body according to Claim 1, **characterized in that** the container (5, 6) is a bag (5, 6) which has a bag opening which points upwards and can preferably be closed.

3. Automotive body according to either of Claims 1 and 2, **characterized in that** the container (5, 6) can be removed.

4. Automotive body according to one of Claims 1 to 3, **characterized in that** the container (5, 6) or at least a frame part of the container is configured as a support part for functional elements (8, 9).

5. Automotive body according to Claim 4, **characterized in that** further containers which are configured as functional elements, such as a cup holder (8, 9), are attached in the region of the central tunnel (1).

6. Automotive body according to one of Claims 1 to 5, **characterized in that** containers (5, 6) are arranged on both sides of the central tunnel (1).

## Revendications

1. Plancher de véhicule automobile comprenant au moins un siège de véhicule et un tunnel central (1) et un levier de frein à main (2) situé sur ce dernier dans le sens longitudinal du véhicule, au moins un espace mort étant formé à côté et le long du levier du frein à main (2) et un compartiment (5, 6) étant prévu dans celui-ci pour la réception d'objets, **caractérisé en ce que** le compartiment (5, 6) est disposé dans la zone (3, 4) entre le tunnel central (1) et le siège de véhicule avec accès libre au siège de véhicule.

2. Plancher de véhicule selon la revendication 1, **caractérisé en ce que** le compartiment (5, 6) est une sacoche (5, 6), laquelle présente une ouverture de sacoche dirigée vers le haut et pouvant de préférence être fermée.

3. Plancher de véhicule selon la revendication 1 ou 2, **caractérisé en ce que** le compartiment (5, 6) peut être enlevé.

4. Plancher de véhicule selon l'une quelconque des revendications 1 à 3, **caractérisé en ce que** le compartiment (5, 6) ou au moins une partie du cadre du compartiment est formé en tant que support d'éléments fonctionnels (8, 9).

5. Plancher de véhicule selon la revendication 4, **caractérisé en ce que**, dans la zone du tunnel central (1), d'autres compartiments, tels qu'un porte-gobelet (8, 9), sont configurés en tant qu'éléments fonctionnels.

6. Plancher de véhicule selon l'une quelconque des revendications 1 à 5, **caractérisé en ce que** des compartiments (5, 6) sont disposés des deux côtés du tunnel central (1).
